**Europäisches Patentamt**

(19) **European Patent Office**

**Office européen des brevets**

(11) Publication number: **0 261 717**
**B1**

(12) **EUROPEAN PATENT SPECIFICATION**

(45) Date of publication of the patent specification: 25.07.90

(51) Int. Cl.⁵: **F16D 3/16,** F16D 3/34, F16D 3/66

(21) Application number: **87201696.9**

(22) Date of filing: **08.09.87**

(54) Coupling.

(30) Priority: **17.09.86 NL 8602355**

(43) Date of publication of application:
**30.03.88 Bulletin 88/13**

(45) Publication of the grant of the patent:
**25.07.90 Bulletin 90/30**

(84) Designated Contracting States:
**DE ES FR GB IT NL**

(56) References cited:
**EP-A- 0 109 371**
**DE-C- 569 889**
**GB-A- 1 503 423**

(73) Proprietor: **SKF Industrial Trading & Development Co, B.V., Kelvinbaan 16, NL-3439 MT Nieuwegein(NL)**

(72) Inventor: **Merkelbach, Boy, Tolsteegplantsoen 22, Utrecht(NL)**

(74) Representative: **Merkelbach, B., SKF Engineering & Research Centre B.V. P.O. Box 2350, NL-3430 DT Nieuwegein(NL)**

ACTORUM AG

## Description

The invention relates to a torque transmitting coupling for joining two generally rod-like elements to each other, allowing angular displacement such that the centerlines of said rod-like elements may form various angles with each other, comprising two forked claw elements directed towards and placed within each other, of which one element is connected to one of the rod-like elements and the other element to the second rod-like element, which always lie in two planes perpendicular to each other and are pivotably coupled to each other by means of an intermediate element, which claw elements each have at least two arms, each arm having two running surfaces on the inside running inward towards each other, each formed by a portion of a conical surface, the axes of the two cones coinciding and being perpendicular to the centerline of the respective rod-like element and to the plane through the respective claw element, which running surfaces are each in sliding contact with a complementarily shaped sliding surface consisting of a portion of a conical surface, which sliding surfaces are formed upon either side of four parts forming the intermediate element, which are each placed between the running surfaces directed towards each other of respectively one claw arm of the one claw element and the adjacent claw arm of the other claw element, and which are each wedge-shaped in such manner that they can normally be displaced inward in radial direction only, a spring element being present that applies a spring pressure acting on the parts of the intermediate element and directed outward to prevent any play from arising as a result of wear between the said running and sliding surfaces. Such a coupling is known from DE-C 569 889.

Couplings of this type have a wide field of application, among other places in steering posts of motor vehicles, where the coupling is preferably so designed that it will break or fail when the angle between the centerlines of the rod-like element exceeds a given value, as a precaution in case of collision.

In the known coupling, the spring element comprises a compression spring of which the extreme turns are each in contact with the plane undersides of two adjacent intermediate element parts, so that the centerline of the spring is transverse to the centerlines of the rod-like elements lying in each other's prolongations.

The disadvantage of this construction is that the spring exerts non-uniform compressive stresses on the several intermediate element parts, so that it is not certain that any play due to wear is eliminated.

The object of the invention is to provide a coupling of the type described that is not subject to this disadvantage.

This object is accomplished in that in the coupling according to the invention, each intermediate element part is provided on the inside with two surfaces running obliquely in the direction of the center towards each other, and in the cavity bounded by these surfaces of the four intermediate element parts, a diabolo-shaped, spring comprising two truncated conical end portions is accommodated, the outermost turns of which, having the greatest diameter, are in contact with the said surfaces, so that the centerline of this spring is parallel to the centerlines, lying in each other's prolongations, of the rod-like elements.

Preferably the said oblique planes of the intermediate element parts run in the direction of the center obliquely outward, the diabolo-shaped spring being in compression.

Advantageously, at least the outermost turns of the diabolo-shaped spring, at least on the outside thereof, are plane, whereby good contact with the said oblique planes of the intermediate element parts is obtained.

Alternatively, however, the outermost turns of the spring may be accommodated in grooves formed in the intermediate element parts, whereby, in certain applications of the coupling, a crooked setting of the spring is avoided, together with the consequent possibility that an intermediate element part may be knocked out of the assembly.

It is observed that EP-A 0 109 371 discloses a coupling in which four intermediate element parts, on the insides thereof, are provided with two planes running obliquely in the direction of the center towards each other, and a cylindrical compression spring is placed in the cavity bounded by said planes. Here, however, the spring cooperates with two wedge-shaped members, so that compressive stresses directed outward are exerted on the four intermediate element parts by way of said wedge-shaped members. This construction, however, comprises comparatively complicated components, notably the wedge-shaped members, which are of a special shape and execution so that they can cooperate with the spring and intermediate element parts.

The invention will be described in more detail with reference to the drawing, in which an embodiment of a coupling according to the invention is shown by way of example, and in which

Fig. 1 shows an external view of a coupling according to the invention;

Fig. 2 is a cross-section at the line II-II in Fig. 1;

Fig. 3 schematically shows the cooperation between the spring and the intermediate element parts; and

Fig. 4 schematically shows a modified cooperation between the spring and the intermediate element parts.

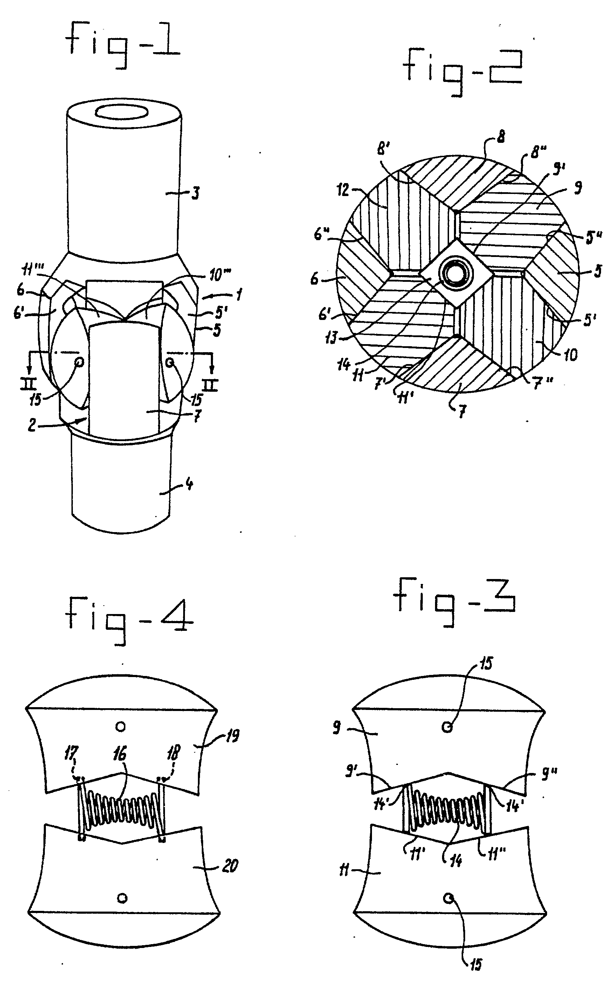

As shown in Figs. 1 and 2, the cross coupling comprises a first forked claw element 1 and a second forked claw element 2 connected to the rods 3 and 4 respectively. Each claw element 1, 2 comprises two arms 5, 6 and 7, 8, each provided with two running surfaces 5', 5"; 6', 6"; 7', 7"; and 8', 8". Each pair of these running surfaces is formed by portions of two conical surfaces, the axes of the two cones coinciding and being perpendicular to the centerline of the corresponding rod 3, 4 and to the plane through the corresponding claw element 1, 2. Each running surface of the arms 5, 6, 7, 8 is in sliding contact with a complementarily shaped sliding surface consisting of a conical surface, which sliding surfaces are formed on opposed sides of four parts 9, 10, 11 and 12 comprising an intermediate element, as indicated in Fig. 1 for parts 10 and 11 by reference numerals 10‴ and 11‴. Each of these intermediate element parts 9, 10, 11, 12 is provided on the inside with two planes running in the direction of the center obliquely towards each other, as is best shown in Fig. 3 for the intermediate element parts 9 and 11, and which are designated therein by reference numerals 9′, 9″ and 11′, 11″ respectively. In the cavity 13 bounded by these oblique planes of the intermediate element parts 9, 10, 11, 12 is placed a diabolo-shaped spring 14, whose extreme turns, of the greatest diameter, are in contact on the one side with the oblique planes 9′, 11′ of parts 9 and 11 and the corresponding oblique planes of parts 10 and 12, and on the other side with the oblique planes 9″ and 11″ of parts 9, 11, and the corresponding oblique planes of parts 10 and 12. The spring 14 is thus under compressive stress so that this spring exerts a uniform outward-directed radial compression on parts 9, 10, 11, 12 by way of the said oblique planes. For good contact of the extreme turns of the spring 14 with the said oblique planes of the intermediate element parts, these extreme turns are flattened on the outside as indicated at 14′.

The intermediate element parts 9, 10, 11, 12 are provided with openings 15, through which openings passes a ring not shown, serving to hold the intermediate element parts together.

In the embodiment of Fig. 4, the outermost turns of the spring 16 are accommodated in grooves 17, 18 formed in the four intermediate elements, of which parts 19 and 20 are shown. This prevents the spring 16 from assuming a crooked position in the space between the four intermediate element parts 19, 20, whereby such a part might be forced out of the respective arms of the claw elements. Such an unwanted condition may occur in event of asymmetrical wear of an intermediate element part because the running surfaces connected to the driving rod of the coupling exhibit more wear than those connected with the driven rod.

It is noted that the intermediate element parts 9-12 are preferably made of a highly wear-resistant synthetic, such as for example a glass-fiber-reinforced nylon.

## Claims

1. Torque transmitting coupling for joining two generally rod-like elements (3, 4) to each other, allowing angular displacement such that the centerlines of said rod-like elements (3, 4) may be form various angles with respect to each other, comprising two forked claw elements (1, 2) directed towards and placed within each other, of which one element is connected to one of the rod-like elements and the other forked claw element to the second rod-like element, which always lie in two planes perpendicular to each other and are pivotably coupled to each other by means of an intermediate element (9, 10, 11, 12), which claw elements each have at least two arms (5, 6, 7, 8), each arm having two running surfaces (5′, 5″; 6′, 6″; 7′, 7″; 8′, 8″) on the inside running inward towards each other, each formed by a portion of a conical surface, the axes of the two cones coinciding and being perpendicular to the centerline of the respective rod-like element and to the plane through the respective claw element, which running surfaces are each in sliding contact with a complementarily shaped sliding surface consisting of a portion of a conical surface, which sliding surfaces are formed upon either side of four parts forming the intermediate element, which are each placed between the running surfaces directed towards each other of respectively one claw arm of the one and which are wedge-shaaped in such manner that they can normally be displaced inward in radial direction only, a spring element (14) being present that applies a spring pressure acting on the parts of the intermediate element (9, 10, 11, 12) and directed outward to prevent any play from arising as a result of wear between the said running and sliding surfaces, characterized in that each intermediate element part (9, 10, 11, 12) is provided on the inside thereof with two planes (9′, 9″; 11′, 11″) running obliquely towards each other in the direction of the center, and in the cavity (13) bounded by these planes of the four intermediate element parts, a diabolo-shaped spring (14) comprising two truncated conical end portions is accommodated, the extreme turns of which, having the largest diameter, being in contact with the said planes, so that the centerline of the spring runs parallel to the centerlines, lying in each other's prolongations, of the rod-like elements (3, 4).

2. Coupling according to claim 1, characterized in that said oblique planes (9′, 9″; 11′, 11″) of the intermediate element parts run obliquely outward in the direction of the center, and the diabolo-shaped spring (14) is in compression.

3. Coupling according to claim 1 or 2, characterized in that at least the outermost turns (14′) of the diabolo-shaped spring (14) are flat, at least on the outside thereof.

4. Coupling according to claim 1 or 2, characterized in that the outermost turns of the spring (16) are accommodated in grooves (17, 18) of the intermediate element parts (19, 20).

5. Coupling according to any of the preceding claims, characterized in that the outermost turns (14′) of the spring (14) at least are coated with the same material as that of the intermediate element parts (9), all in order that the wear beween the cooperating parts (9, 14) may be limited to a minimum.

## Revendications

1. Accouplement de transmission de couple, prévu pour relier l'un à l'autre deux éléments (3, 4) analogues dans leur ensemble à des tringles, tout en permettant un déplacement angulaire tel que les axes de ces éléments (3, 4) analogues à des tringles peuvent former des angles divers l'un par rapport à l'autre, comprenant deux éléments fourchus (1, 2) à griffes tournés l'un vers l'autre et placés l'un dans l'autre, dont l'un de ces éléments fourchus à griffes est relié à un des éléments analogues à des tringles et dont l'autre élément fourchu à griffes est relié au deuxième élément analogue à des tringles, qui se trouvent toujours dans deux plans perpendiculaires l'un à l'autre et sont reliés l'un à l'autre de manière à pouvoir pivoter au moyen d'un élément intermédiaire (9, 10, 11, 12), ces éléments à griffes comportent chacun au moins deux gras (5, 6, 7, 8), chaque bras présentant à l'intérieur deux surfaces mobiles (5′, 5″; 6′, 6″; 7′, 7″; 8′, 8″) s'étendant intérieurement l'une vers l'autre, formées chacune par une partie d'une surface conique, les axes des deux cônes coïncidant et étant perpendiculaires à l'axe de l'élément correspondant analogue à une tringle et au plan passant par l'élément à griffes correspondant, ces surfaces mobiles sont chacune en contact de glissement avec une surface de glissement ayant une forme complémentaire et se composant d'une partie d'une surface conique, ces surfaces de glissement sont formées de chaque côté de quatre parties constituant l'élément intermédiaire, qui sont placées chacune entre les surfaces mobiles tournées l'une vers l'autre respectivement d'un bras à griffes du premier élément à griffes et du bras à griffes contigu de l'autre élément à griffes, et qui sont en forme de coin de manière à pouvoir normalement se déplacer vers l'intérieur dans le sens radial seulement, un élément (14) formant ressort étant présent pour appliquer une pression de ressort agissant sur les parties de l'élément intermédiaire (9, 10, 11, 12) et dirigée vers l'extérieur pour empêcher tout jeu résultant de l'usure entre les surfaces mobiles et les surfaces de glissement, caractérisé en ce que chaque partie (9, 10, 11, 12) de l'élément intermédiaire présente à l'intérieur deux plans (9, 9″; 11′, 11″) s'étendant obliquement l'un vers l'autre dans la direction du centre, et dans la cavité (13) limitée par ces plans des quatre parties de l'élément intermédiaire, est logé un ressort (44) de forme globoïdale comprenant deux parties d'extrémité en tronc de cône, dont les spires extérieures extrêmes, ayant le diamètre le plus grand, sont en contact avec ces plans, de sorte que l'axe du ressort est parallèle aux axes, dans le prolongement l'un de l'autre, des éléments (3, 4) analogues à des tringles.

2. Accouplement suivant la revendication 1, caractérisé en ce que ces plans obliques (9′, 9″; 11′, 11″) des parties de l'élément intermédiaire s'étendent dans la direction du centre obliquement vers l'extérieur, et en ce que le ressort (14) de forme globoidale travaille en compression.

3. Accouplement suivant la revendication 1 ou 2, caractérisé en ce qu'au moins les spires extérieures extrêmes (14′) du ressort (14) de forme globoïdale sont plates, du moins sur leur partie extérieure.

4. Accouplement suivant la revendication 1 ou 2, caractérisé en ce que les spires extérieures extrêmes du ressort (16) sont logées dans des gorges (17, 18) formées dans les parties (19, 20) de l'élément intermédiaire.

5. Accouplement suivant l'une quelconque des revendications précédentes, caractérisé en ce que les spires extérieures extrêmes (14′) du ressort (14) au moins sont recouvertes de la même matière que celle des parties (9) de l'élément intermédiaire, tout cela afin de pouvoir limiter au minimum l'usure entre les parties (9, 14) qui coopèrent.

## Patentansprüche

1. Drehmomentübertragungskupplung zum Verbinden zweier im wesentlichen stangenartiger Elemente (3, 4) miteinander unter Ermöglichung eines Winkelversatzes dergestalt, daß die Mittellinien der stangenförmigen Elemente (3, 4) verschiedene Winkel zueinander einschließen können, bestehend aus zwei gegeneinander gerichteten und ineinander greifenden gegabelten Klauenelementen (1, 2), von denen das eine mit einem der stangenförmigen Elemente und das andere mit dem zweiten stangenförmigen Element verbunden sind und die ständig in zwei Ebenen lotrecht zueinander liegen und miteinander mittels eines Zwischenelements (9, 10, 11, 12) schwenkbar gekuppelt sind, wobei die Klauenelemente jeweils mindestens zwei Arme (5, 6, 7, 8) aufweisen, von denen jeder Arm zwei Laufflächen (5′, 5″; 6′, 6″; 7′, 7″; 8′, 8″) an der Innenseite trägt, welche nach einwärts gegeneinander verlaufen und jeweils von einem Teil einer Kegelfläche gebildet sind, deren zwei Kegelachsen einander schneiden und lotrecht zur Mittellinie des entsprechenden Stangenelementes und zur Ebene durch das entsprechende Klauenelement verlaufen, und von welchem jede Lauffläche in Gleitberührung mit einer komplementär geformten und aus einem Teil einer Kegelfläche bestehenden Gleitfläche steht, wobei die Gleitflächen an jeder Seite von vier das Zwischenelement bildenden Teilen ausgebildet sind, die jeweils zwischen den gegeneinander gerichteten Laufflächen von entsprechend einem Klauenarm des einen Klauenelements und dem benachbarten Klauenarm des anderen Klauenelements angeordnet und dergestalt keilförmig ausgebildet sind, daß sie normalerweise nur einwärts in radialer Richtung verschoben werden können, wobei ein Federelement (14) vorhanden ist, das einen auf die Teile des Zwischenelements (9, 10, 11, 12) wirkenden und auswärts gerichteten Federdruck ausübt, um das Auftreten jeglichen Spiels als Ergebnis eines Verschleißes zwischen den Lauf- und den Gleitflächen zu verhindern, dadurch gekennzeichnet, daß jeder Zwischenelementteil (9, 10, 11, 12) an seiner Innenseite mit zwei Ebenen (9′, 9″; 11′, 11″) versehen ist, die schräg zueinander in Richtung zur Mitte verlaufen, und daß in der von diesen Ebenen der vier Zwischenelementteile begrenzten Ausnehmung (13) eine diaboloförmige Feder (14) aufgenommen ist, welche zwei kegelstumpfförmige Endabschnitte aufweist; deren äußerste Windungen mit dem größten Durchmesser in Berührung mit diesen Ebenen sind, so daß die Mittellinie der Feder parallel zu den Mittellinien verläuft, die in den gegenseitigen Verlängerungen der stangenförmigen Elemente (3, 4) liegen.

2. Kupplung nach Anspruch 1, dadurch gekennzeichnet, daß die schrägen Ebenen (9′, 9″; 11′, 11″) der Zwischenelementteile schräg nach auswärts in Richtung zur Mitte verlaufen und die diaboloförmige Feder (14) zusammengedrückt ist.

3. Kupplung nach Anspruch 1 oder 2, dadurch gekennzeichnet, daß wenigstens die äußersten Windungen (14′) der diaboloförmigen Feder (14) wenigstens an einer Außenseite derselben flach sind.

4. Kupplung nach Anspruch 1 oder 2, dadurch gekennzeichnet, daß die äußersten Windungen der Feder (16) in Nuten (17, 18) der Zwischenelementteile (19, 20) aufgenommen sind.

5. Kupplung nach einem der vorhergehenden Ansprüche, dadurch gekennzeichnet, daß die äußersten Windungen (14') der Feder (14) zumindest mit demselben Material wie dem der Zwischenelementteile (9) überzogen sind, alles um den Verschleiß zwischen den zusammenwirkenden Teilen (9, 14) auf ein Minimum zu beschränken.

fig-1

fig-2

fig-4

fig-3